# EUROPEAN PATENT APPLICATION

(11) **EP 4 664 735 A1**
(43) Date of publication of application: **17.12.2025**
(21) Application number: 24753387.0
(22) Date of filing: 07.02.2024
(51) Int. Cl.: H02K 15/085

(54) **METHOD FOR MANUFACTURING ARMATURE, AND DEVICE FOR MANUFACTURING ARMATURE**

(30) Priority: 10.02.2023 JP 2023019286
(71) Applicant: NHK Spring Co., Ltd., Kanagawa 236-0004 (JP)
(72) Inventor: UEDA, Ryosuke, Yokohama-shi, Kanagawa 236-0004 (JP); HIROTA, Yuji, Yokohama-shi, Kanagawa 236-0004 (JP); SHIMADA, Satoru, Yokohama-shi, Kanagawa 236-0004 (JP); OMATA, Hiromasa, Yokohama-shi, Kanagawa 236-0004 (JP)
(74) Representative: DREISS Patentanwälte PartG mbB
(86) International application number: PCT/JP2024/004109
(87) International publication number: WO 2024/166944

(57) **Abstract**

To improve production efficiency of an armature.

A manufacturing method manufactures a stator (10) that includes a stator core (12) formed with plural slots, and plural segment coils (20) including both leg sections inserted into respective slots and stacked in a radial direction of the stator core (12) in a multilayer form and aligned in a circular ring shape. In an assembly process of this manufacturing method, an assembly jig (40), which is formed with plural assembly slots set with at least one out of a width or a length greater than for the plural slots formed in the stator core (12), is used to stack the plural segment coils (20) in the multilayer form. In an insertion process the plural segment coils (20) that have been stacked in the multilayer form are inserted into the plural slots formed in the stator core (12).

## Description

### Technical Field

The present disclosure relates to a method of manufacturing an armature and a device for manufacturing an armature.

### Background Art

Japanese Patent Application Laid-Open (JP-A) No. 2020-182339 discloses an alignment device that aligns plural segment coils in a circular ring shape for each layer to form aligned coils. The aligned coils of each layer are gripped in a chuck jig and taken out from the alignment device, combined with aligned coils from other layers, and inserted into slots of a stator core.

Japanese Patent No. 3975891 discloses a segment coil circular ring alignment device that all at once aligns plural segment coils into a multilayer form by sequentially taking out jigs into which segment coils have been inserted by a segment coil insertion section stored with multiple segment coils from the inner diameter side.

### SUMMARY OF INVENTION

### Technical Problem

JP-A No. 2020-182339 does not disclose a specific method of combining (assembling) the aligned coils for each layer.

The related art disclosed in Japanese Patent No. 3975891 not only results in a circular ring alignment device that is both complicated and bulky in itself, but also needs a great deal of time to align one motor's worth of segment coils, leaving room for improvement from the perspective of improving production efficiency.

In consideration of the above circumstances, an object of the present disclosure is to obtain an method of manufacturing an armature and an device for manufacturing an armature that are capable of improving production efficiency.

### Solution to Problem

A method of manufacturing an armature according to the present disclosure is a method of manufacturing an armature including a core formed with plural slots, and plural segment coils that have both leg sections inserted into respective slots of the core and that have been stacked in a radial direction of the core in a multilayer form and aligned in a circular ring shape. The method of manufacturing an armature includes an assembly process that uses an assembly jig, which is formed with plural assembly slots set with at least one out of a width or a length greater than for the plural slots formed in the core, to stack the plural segment coils in the multilayer form, and an insertion process in which the plural segment coils that have been stacked in the multilayer form are inserted into the plural slots formed in the core.

Moreover, the method of manufacturing an armature according to the present disclosure includes an alignment process in which plural alignment jigs that are each formed with plural alignment slots are employed to align plural segment coils in a circular ring shape separately for each of the plural layers.

Moreover, in the method of manufacturing an armature of the present disclosure, the plural segment coils are gripped by a chuck, and the chuck is configured by a structure dividable above and below, and a gripping process is included in which a coil end side and a coil leading end side of the plural segment coils are gripped by the divided chuck.

Moreover, in the method of manufacturing an armature according to the present disclosure, the plural segment coils are gripped by a chuck, and a coil re-grasping process is included in which the leading end side of the plural segment coils is re-gripped after the coil end sides of the plural segment coils have been gripped by the chuck and removed.

Moreover, the method of manufacturing an armature according to the present disclosure is the method of manufacturing an armature including a core formed with plural slots, and plural segment coils that have both leg sections inserted into respective slots of the core and that have been stacked in a radial direction of the core in a multilayer form and aligned in a circular ring shape. The method of manufacturing an armature includes a re-grasping process in which, after the plural segment coils aligned in the circular ring shape using a jig have been gripped by a gripping chuck and removed from the jig, leg tips of the plural segment coils are abutted against a base, and the gripping chuck is relatively moved toward a leg tip side with respect to the plural segment coils, and the plural segment coils are re-gripped by the gripping chuck.

A device for manufacturing an armature according to the present disclosure is a device for manufacturing an armature including a core formed with plural slots and plural segment coils that have both leg sections inserted into respective slots of the core and that have been stacked in a radial direction of the core in a multilayer form and aligned in a circular ring shape. The device for manufacturing an armature includes an assembly device that includes an assembly jig including plural assembly slots that have been set with at least one out of a width or a length greater than for the plural slots formed in the core, and that stacks the plural segment coils in the multilayer form, and an insertion device for inserting plural segment coils that have been stacked in the multilayer form into the plural slots formed in the core.

Moreover, an device for manufacturing an armature according to the present disclosure includes an alignment device that uses plural alignment jigs that are each formed with plural alignment slots to align plural segment coils in a circular ring shape separately for each of the plural layers.

Moreover, an device for manufacturing an armature according to the present disclosure includes a chuck that is configured by a structure dividable above and below, and that grips a coil end side and a coil leading end side of the plural segment coils.

In the method of manufacturing an armature according to the present disclosure, the assembly process and the insertion process are able to be executed in parallel, enabling production time to be shortened and production efficiency to be improved.

Moreover, in the method of manufacturing an armature according to the present disclosure, the alignment process is able to be executed in parallel to the assembly process and the insertion process, enabling production time to be shortened and production efficiency to be improved.

Moreover, the method of manufacturing an armature according to the present disclosure includes the gripping process in which the coil end side and the coil leading end side of the plural segment coils are gripped using the chuck that is dividable above and below, and a position of the leg tips of the plural segment coils is accordingly stable, meaning that the target of the leg tips on the slots is easier to hit when the plural segment coils are being inserted into another jig or a slot of the core, and thereby improving production efficiency.

Moreover, in the method of manufacturing an armature according to the present disclosure, the position of the leg tips of the plural segment coils is made stable by the re-grasping process, meaning that the target of the leg tips on the slots is easier to hit when the plural segment coils are being inserted into another jig or a slot of the core, and thereby improving production efficiency.

In the method of manufacturing an armature according to the present disclosure, the position of the leg tips of the plural segment coils is made stable by the re-grasping process, and meaning that the target of the leg tips on the slots is easier to hit when the plural segment coils are being inserted into another jig or a slot of the core, and thereby improving production efficiency.

In the device for manufacturing an armature according to the present disclosure, the assembly device and the insertion device are able to operate in parallel, and so the production time can accordingly be shortened, thereby improving the production efficiency.

Moreover, in the device for manufacturing an armature according to the present disclosure, the alignment device is able to operate in parallel to the assembly device and the insertion device, and so the production time can accordingly be shortened, thereby improving the production efficiency.

Moreover, the device for manufacturing an armature according to the present disclosure includes the chuck that has a structure dividable above and below, and a coil end side and a coil leading end side of the plural segment coils are gripped by the chuck, meaning that the position of the leg tips of the plural segment coils is made stable and the target of the leg tips on the slots is easier to hit when the plural segment coils are being inserted into another jig or a slot of the core, thereby improving production efficiency.

### BRIEF DESCRIPTION OF DRAWINGS

Fig. 1 is a perspective view illustrating a stator manufactured by the method of manufacturing an armature according to an exemplary embodiment.
Fig. 2 is a face-on view of a segment coil for provision in a stator.
Fig. 3 is an explanatory diagram to explain the method of manufacturing an armature according to an exemplary embodiment.
Fig. 4 is a cross-section illustrating an assembly jig that is a jig employed for segment coils according to an exemplary embodiment.
Fig. 5 is a plan view illustrating an upper section of an assembly jig.
Fig. 6 is a cross-section corresponding to line F6-F6 of Fig. 5.
Fig. 7A is a first cross-section to explain a condition when a segment coil is being removed from an alignment jig by a gripping chuck, which is a segment coil chuck according to an exemplary embodiment.
Fig. 7B is a second cross-section to explain a condition when a segment coil is being removed from an alignment jig by a gripping chuck.
Fig. 7C is a third cross-section to explain a condition when a segment coil is being removed from an alignment jig by a gripping chuck.
Fig. 8 is a cross-section illustrating a first comparative example.
Fig. 9A is a first cross-section to explain a re-grasping process in the method of manufacturing an armature according to an exemplary embodiment.
Fig. 9B is a second cross-section to explain a re-grasping process.
Fig. 9C is a third cross-section to explain a re-grasping process.

### DESCRIPTION OF EMBODIMENTS

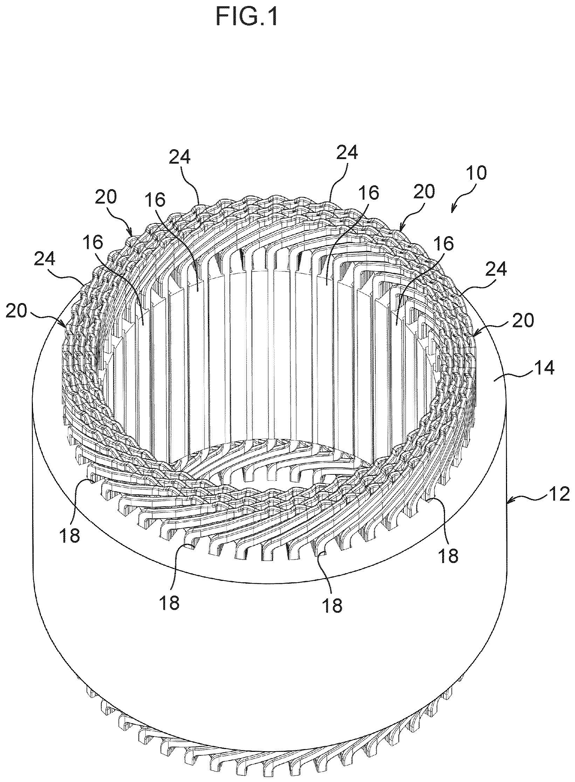

Description follows regarding an exemplary embodiment of the present disclosure, with reference to Fig. 1 to Fig. 9C. Note that sometimes some of the reference numerals are omitted in the figures in order to facilitate reading of the drawings. Fig. 1 is a perspective view of a stator 10 manufactured by the method of manufacturing an armature according to the present exemplary embodiment. The stator 10 includes a stator core 12, and multiple segment coils 20. The stator 10 configures, for example together with a non-illustrated rotor, a three-phase alternating current rotary electrical machine.

The stator core 12 is formed in a circular cylindrical shape from multiple sheets of magnetic steel that have been stacked. The stator core 12 includes a yoke 14, multiple teeth 16, and multiple slots 18. The multiple teeth 16 and the multiple slots 18 are formed alternately in a row along a circumferential direction at an inner peripheral side of the stator core 12. The multiple slots 18 are open at both sides in an axial direction, and at the inside in a radial direction.

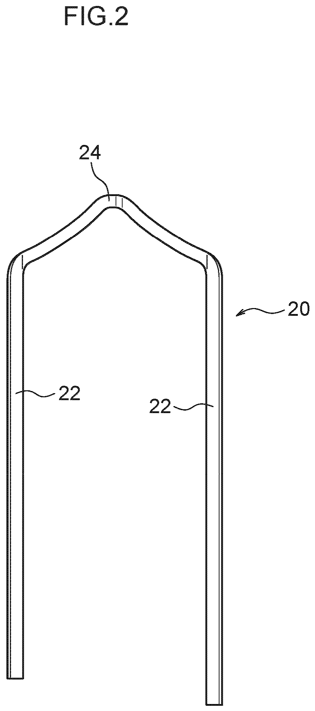

As illustrated in Fig. 2, the segment coils 20 are each, as an example, formed in a substantially U-shape from flat wire having a rectangular cross-section made from copper or the like. The segment coils 20 each include a pair of leg sections 22 that extend substantially parallel to each other, and a coil end section 24 that connects one-end portions of the pair of leg sections 22 together. The segment coils 20 are covered by an insulation cover except for at leading end portions (leg tips) of the pair of leg sections 22.

The pair of leg sections 22 are inserted from an axial direction one side into different slots 18 separated from each other in the circumferential direction of the stator core 12. A non-illustrated insulation member (in this case an insulation paper) is interposed between each of the leg sections 22 and the stator core 12. The coil end section 24 is disposed at the exterior of the slots 18 on the axial direction one side of the stator core 12, and connects base end portions of the pair of leg sections 22 together in the circumferential direction. The multiple segment coils 20 are stacked in plural layers (3 layers in this case) in the radial direction of the stator core 12 and are aligned with each other in a circular ring shape. The leading end portions of the leg sections 22 of the segment coil 20 project out from an end face of the stator core 12 at the axial direction other side, are subjected to twist processing, and are joined to leading end portions of the leg sections 22 of another segment coil 20.

In the manufacturing method and manufacturing device described later, the multiple segment coils 20 are inserted into slots of the stator core all at once in a state in which the plural layers have been assembled together. In the present exemplary embodiment 3 layers of the segment coils 20 are formed.

Note that although in the present exemplary embodiment the segment coils 20 are configured from a flat metal wire having a rectangular cross-section made from metal, there is no limitation thereto, and the segment coils may be configured from a flat wire having a rectangular cross-section made from plural strands. Moreover, although in the present exemplary embodiment, the leading end portions of the leg sections 22 of the segment coil 20 are joined to the leading end portions of the leg sections 22 of another segment coil 20, there is no limitation thereto, and the segment coil 20 may be joined electrically to another segment coil 20 in the slots 18 of the stator core 12. Moreover, although in the present exemplary embodiment the stator core 12 is configured from stacked steel plates, there is no limitation thereto, and the stator core 12 may be one having at least a portion thereof configured from a dust core.

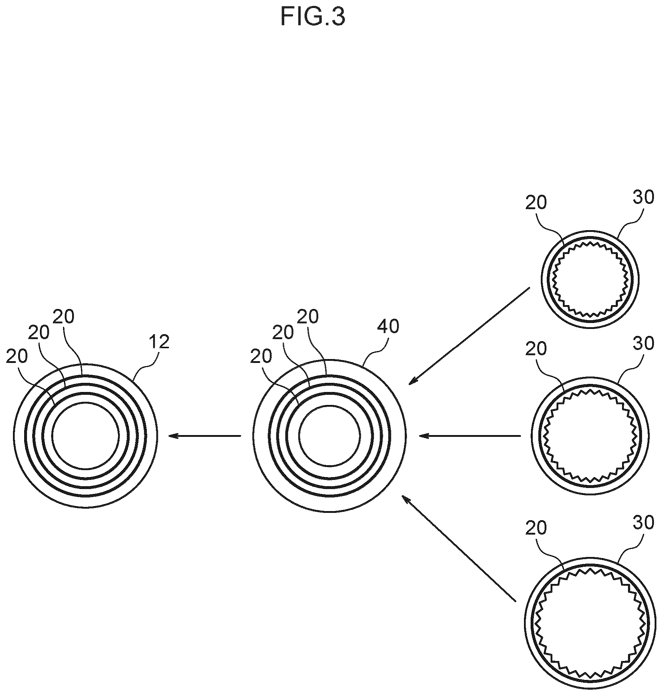

Fig. 3 is an explanatory diagram to explain a manufacturing method of an armature according to the present exemplary embodiment. The method of manufacturing an armature includes an alignment process, an assembly process, and an insertion process. In the alignment process, plural (3 in this case) alignment jigs 30 each formed with plural alignment slots (omitted in the drawings) are employed to align the plural segment coils 20 in a circular ring shape separately for each of the plural (in this case 3) layers. In the alignment process, the plural segment coils 20 are inserted in sequence into the respective alignment slots while the leg sections 22 are shifted along the alignment slots of the alignment jigs 30 one by one in the circumferential direction, so as to form a single layer by performing one lap thereof.

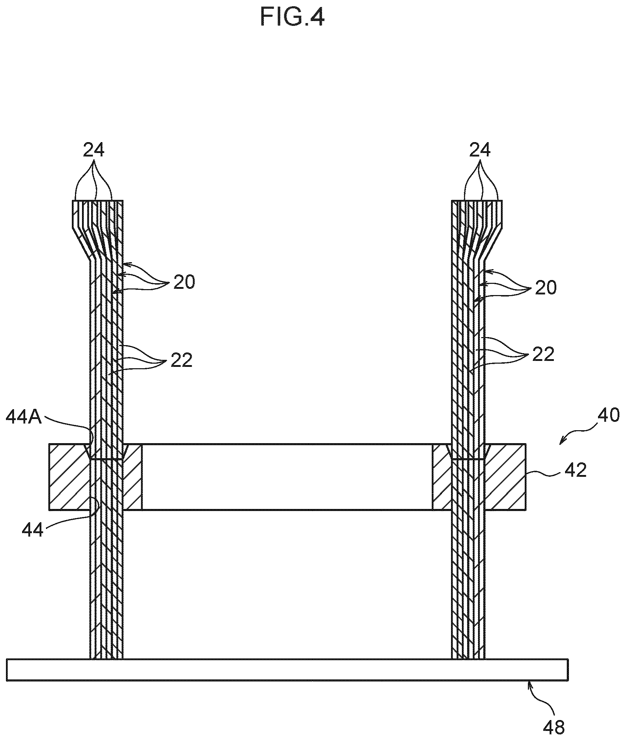

In the assembly process, an assembly jig 40 (see Fig. 4 to Fig. 6), this being a segment coil jig formed with plural assembly slots 44, is employed and the plural segment coils 20 that have been aligned in each of the plural layers as described above are stacked in a multilayer form. In this assembly process, for example, the segment coils 20 of each of the layers are inserted into the assembly slots 44 of the assembly jig 40 in sequence from the outside layer and stacked in a layered form. The plural segment coils 20 are thereby assembled together at a single location, and are in a state that can be inserted into the stator core 12 all at once.

In the insertion process, the plural segment coils 20 that have been stacked on each other in a multilayer form as described above are inserted all at once into the plural slots 18 formed in the stator core 12. When doing so, for example, a jig is provided to guide leg tips of the leg sections 22 of the segment coils 20 onto the upper face of the stator core 12. The segment coils 20 are thereby insertable into the stator core 12 in a stable manner. Note that Fig. 3 schematically illustrates the segment coils 20, the alignment jigs 30, the assembly jig 40, and the stator core 12.

Dividing the processes into the alignment process, the assembly process, and the insertion process as described above enables parallel operation, enabling the total machine time for one workpiece to be shortened. In particular in the alignment process, by executing the alignment of the segment coils 20 for each layer in parallel enables the production time to be greatly shortened compared to sequential execution. Furthermore, where there is, for example, an intention to achieve increased efficiency of the production time, parallel operation is enabled by dividing into a gripping chuck for gripping the plural segment coils 20 when transitioning from the alignment process to the assembly process and a gripping chuck for gripping the plural segment coils 20 when transitioning from the assembly process to the insertion process, and this also makes it easier to match the shape of the gripping chuck to circular ring shapes of the segment coils 20 in each of the processes.

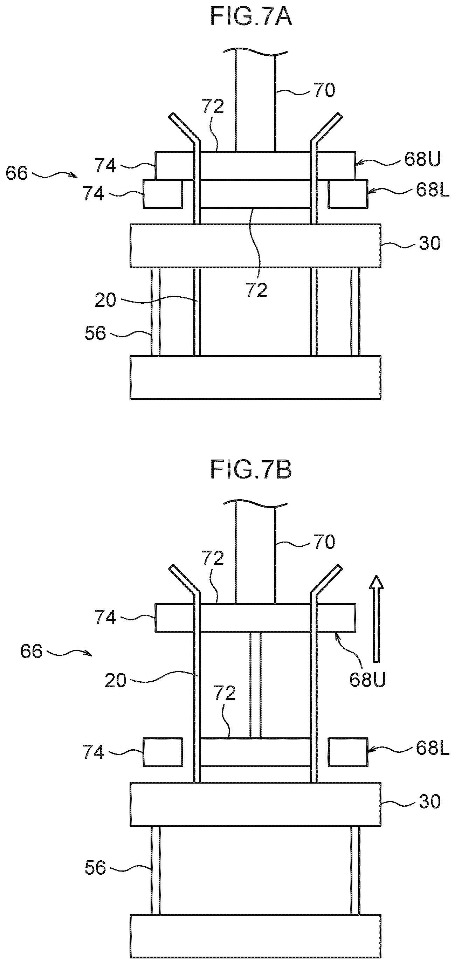

As illustrated in Fig. 4, the assembly jig 40 employed in the assembly process includes an upper section 42 formed in a ring shape, and a lower section 48 formed in a circular plate shape. The upper section 42 and the lower section 48 are arranged coaxially to each other, and are connected together by plural support pillars 56 (see Fig. 7A to Fig. 7C; omitted in Fig. 4).

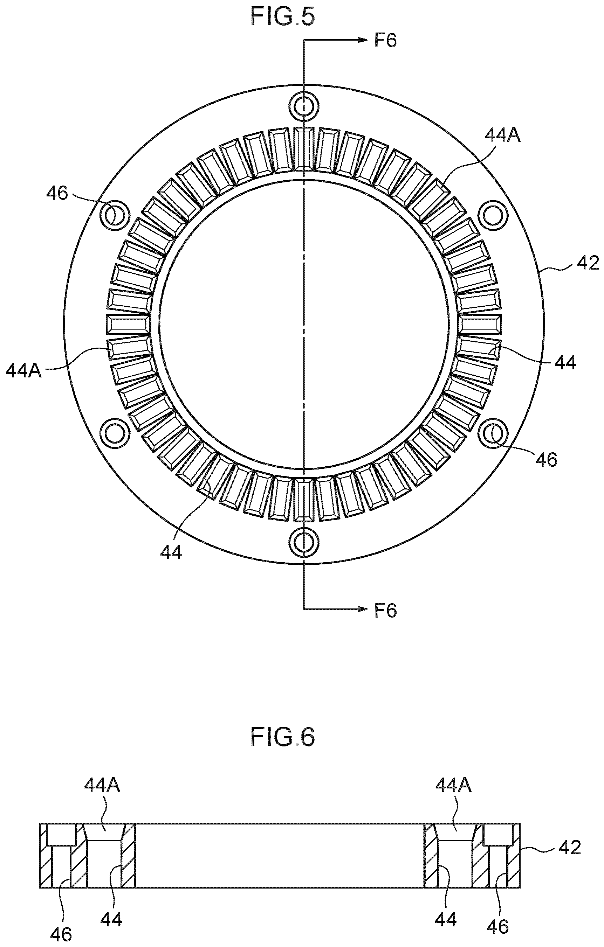

As illustrated in Fig. 5 and Fig. 6, the assembly slots 44, which are plural slots into which the leg sections 22 of the plural segment coils 20 are inserted, are formed in the upper section 42, and lower end portions of the leg sections 22 of the plural segment coils 20 that have been inserted into the plural assembly slots 44 hit against the lower section 48. Note that, in Fig. 5 and Fig. 6, 46 indicates fastening holes for fastening and fixing the support pillars 56.

The assembly slots 44 are configured with at least one out of width or a length (in this case both) set larger than for the slots 18 formed to the stator core 12. Specifically, the assembly slots 44 have wider openings than the slots 18 in a state in which an insulation paper, which is an insulation member, has been inserted therein, thereby relaxing the leg tip accuracy required when inserting the leg sections 22 of the segment coil 20 into the assembly jig 40.

This thereby means that a task of first assembling in the assembly jig 40 and then inserting is easier than inserting the leg sections 22 of the segment coils 20 directly into the stator core 12. Moreover, this also makes it easier to ensure that the segment coils 20 of layers previously inserted do not get in the way of the segment coils 20 subsequently inserted when the segment coils 20 of each of the layers are being inserted into the assembly jig 40 in sequence from the outside layer.

Moreover, as illustrated in Fig. 5 and Fig. 6, the assembly slots 44 of the assembly jig 40 each include a taper portion 44A having a taper shape tapering outward toward an opening at the upper end thereof. Due to being able to guide the leg sections 22 of the segment coils 20 into the assembly slots 44 using the taper portions 44A, the leg tip accuracy required when inserting the leg sections 22 of the segment coil 20 into the assembly jig 40 can be relaxed even more.

Note that although the description of the present exemplary embodiment describes including an alignment process, an assembly process, and an insertion process, there is no limitation thereto and, for example, an alignment process may be omitted, and the plural segment coils 20 may be inserted directly into the assembly jig 40. In such cases too, the assembly process and the insertion process are able to be executed as parallel operations, enabling the production time to be shortened. Moreover, in the assembly process, due to employing the assembly jig 40 including the assembly slots 44 formed with at least one out of width or a length being greater than for the slots 18 formed to the stator core 12, equipment can be operated faster than operations of conventional equipment, which operates at low speeds when high accuracy is required, thereby enabling the production time to be shortened.

Fig. 7A to Fig. 7C illustrate a gripping chuck 66, which is a segment coil chuck for gripping the plural segment coils 20 that have been aligned in a circular ring shape. The gripping chuck 66 is, as an example, divided into an upper side gripping section 68U that grips the plural segment coils 20 from the peripheral inside and peripheral outside, and a lower side gripping section 68L that is arranged below the upper side gripping section 68U and grips the plural segment coils 20 from the peripheral inside and peripheral outside, and also includes a relative movement mechanism 70 to move the upper side gripping section 68U and the lower side gripping section 68L relative to each other in the up-down direction. The gripping chuck 66 is, for example, moved by a transport device such as a non-illustrated robot manipulator or the like, and executes a gripping process.

The upper side gripping section 68U and the lower side gripping section 68L include an inner peripheral side chuck 72 that contacts the plural segment coils 20 from the inner peripheral side thereof, and an outer peripheral side chuck 74 that contacts the plural segment coils 20 from the outer peripheral side thereof. The outer peripheral side chuck 74 includes, for example, a drive source such as an air cylinder or the like for pressing the plural segment coils 20 toward the inner peripheral side chuck 72 side. The relative movement mechanism 70 includes a drive source such as an air cylinder or the like for moving the upper side gripping section 68U and the lower side gripping section 68L relative to each other in the up-down direction.

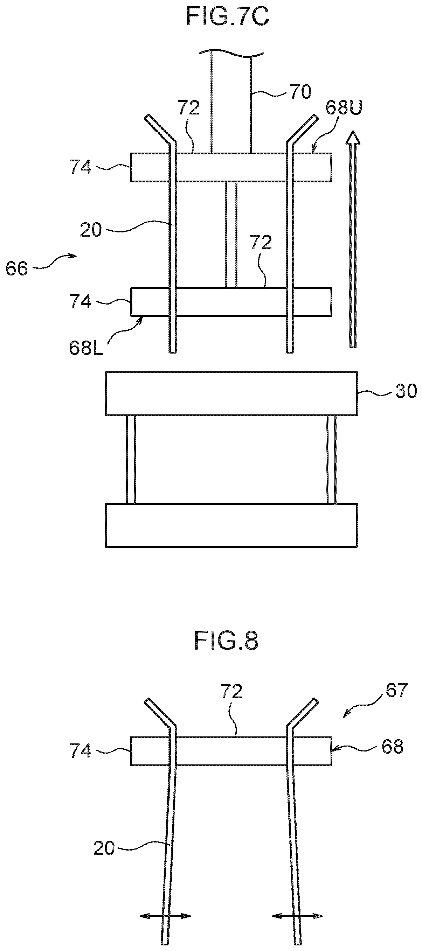

In the gripping chuck 66 configured as described above, for example as illustrated in Fig. 7A, when the plural segment coils 20 are being removed from the alignment jigs 30, upper portions (coil end sides) of the plural segment coils 20 are gripped by the upper side gripping section 68U in a state in which the upper side gripping section 68U is in close proximity to the lower side gripping section 68L. Next, as illustrated in Fig. 7B, the upper side gripping section 68U is raised with respect to the lower side gripping section 68L, and lower portions (coil leading end sides) of the plural segment coils 20 are arranged at the height of the lower side gripping section 68L. Next, as illustrated in Fig. 7C, the lower portions of the plural segment coils 20 are gripped by the lower side gripping section 68L, and in this state the gripping chuck 66 is raised as a whole. The plural segment coils 20 are thereby removed from the alignment jigs 30. Note that a similar process is performed when the plural segment coils 20 are being removed from the assembly jig 40.

The plural segment coils 20 that have been removed as described above are gripped at lower portions (leg tips) thereof by the lower side gripping section 68L of the gripping chuck 66, raising the positional accuracy of the leg tips. As a result thereof, the leg sections 22 of the segment coil 20 are easily inserted into the stator core 12, and production efficiency of the stator 10 is improved. Note that although there is no issue with gripping the coil end sides of the segment coils 20 using a single gripping section 68 of a gripping chuck 67 in cases in which the coils are not so long, the segment coils 20 have a tendency to tilt over in cases in which the overall length of the segment coils 20 is particularly long, as in the comparative example illustrated in Fig. 8. In such cases, this results in the position of the leg tips not being restricted, and so the position of the leg tips is no longer stable. As a result thereof, the target for the leg tips on the jig and on the core slots becomes more difficult to hit when assembling or inserting the plural segment coils 20, and workpiece production difficulty becoming high. From this perspective, in the gripping chuck 66 described above, the leg tips of the plural segment coils 20 are gripped by the lower side gripping section 68L, and so the position of the leg tips is stable. This thereby facilitates hitting the target of the leg tips on the slots when assembly and inserting as described above, and simplifies workpiece production, thereby enabling the number of defect products generated to be reduced.

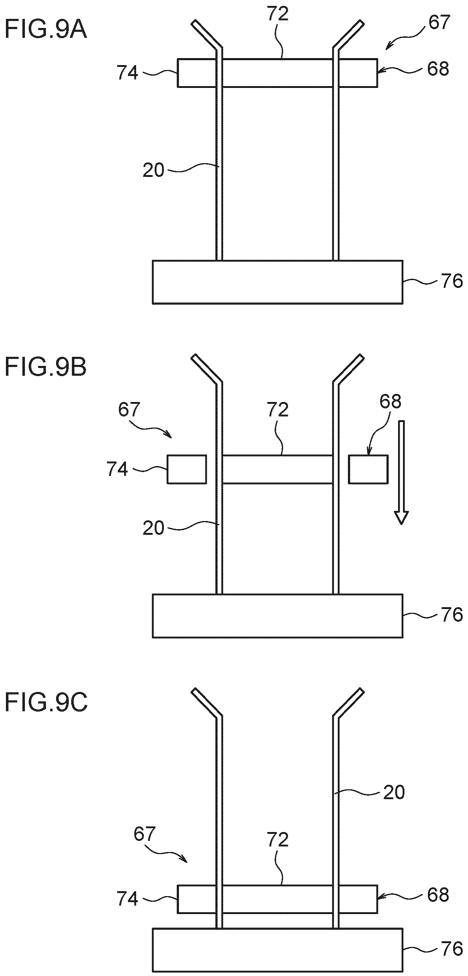

Note that as illustrated in Fig. 9A to Fig. 9C, even in cases in which the overall length of the segment coils 20 is particularly long, and the gripping chuck 67 only includes a single gripping section 68, by executing a re-grasping process the leg tip accuracy can be improved to the same extent as when employing the gripping chuck 66. In such a re-grasping process, after the plural segment coils 20 have been removed from the jig using the gripping chuck 67, as illustrated in Fig. 9A, lower ends (leg tips) of the plural segment coils 20 are hit against a base 76 of some sort or the other. Next, as illustrated in Fig. 9B, the gripping section 68 is slightly loosened, and the gripping section 68 is displaced toward the leg tip side of the plural segment coils 20. Then as illustrated in Fig. 9C, the plural segment coils 20 are re-gripped again by the gripping section 68. The position of the leg tips of the plural segment coils 20 is thereby stable, with this facilitating hitting the target of the leg tips on the slots when assembly and inserting, and facilitating workpiece production.

Moreover, although in the exemplary embodiment described above a case has been described in which a stator is manufactured, the present disclosure is also applicable to manufacturing a rotor.

Various modifications may be implemented within a range not departing from the spirit of the present disclosure. Moreover, obviously the scope of rights of the present disclosure is not limited to the exemplary embodiment described above.

The entire content of the disclosure of Japanese Patent Application No. 2023-019286 filed on October 2, 2023 is incorporated by reference in the present specification. All publications, patent applications and technical standards mentioned in the present specification are incorporated by reference in the present specification to the same extent as if each individual publication, patent application, or technical standard was specifically and individually indicated to be incorporated by reference.

## Claims

1. A method of manufacturing an armature that comprises a core formed with a plurality of slots, and a plurality of segment coils that have both leg sections inserted into respective slots of the core and that have been stacked in a radial direction of the core in a multilayer form and aligned in a circular ring shape, the method of manufacturing an armature comprising:
an assembly process that uses an assembly jig, which is formed with a plurality of assembly slots set with at least one of a width or a length greater than for the plurality of slots formed in the core, to stack the plurality of segment coils in the multilayer form; and
an insertion process in which the plurality of segment coils that have been stacked in the multilayer form are inserted into the plurality of slots formed in the core.

2. The method of manufacturing an armature of claim 1, further comprising an alignment process in which a plurality of alignment jigs, which are each formed with a plurality of alignment slots, are used to align a plurality of segment coils in a circular ring shape separately for each of the plurality of layers.

3. The method of manufacturing an armature of claim 1, wherein:
the plurality of segment coils are gripped by a chuck; and
the chuck is configured by a structure dividable above and below, and the method of manufacturing an armature further comprises a gripping process in which a coil end side and a coil leading end side of the plurality of segment coils are gripped by the divided chuck.

4. The method of manufacturing an armature of claim 1, wherein:
the plurality of segment coils are gripped by a chuck; and
the method of manufacturing an armature further comprises a coil re-grasping process in which a leading end side of the plurality of segment coils is re-gripped after coil end sides of the plurality of segment coils have been gripped by the chuck and removed.

5. A method of manufacturing an armature that comprises a core formed with a plurality of slots, and a plurality of segment coils that have both leg sections inserted into respective slots of the core and that have been stacked in a radial direction of the core in a multilayer form and aligned in a circular ring shape, the method of manufacturing an armature comprising:
a re-grasping process in which, after the plurality of segment coils aligned in the circular ring shape using a jig have been gripped by a gripping chuck and removed from the jig, leg tips of the plurality of segment coils are abutted against a base, and the gripping chuck is relatively moved toward a leg tip side with respect to the plurality of segment coils, and the plurality of segment coils are re-gripped by the gripping chuck.

6. A device for manufacturing an armature that comprises a core formed with a plurality of slots, and a plurality of segment coils that have both leg sections inserted into respective slots of the core and that have been stacked in a radial direction of the core in a multilayer form and aligned in a circular ring shape, the device for manufacturing an armature comprising:
an assembly device that includes an assembly jig including a plurality of assembly slots that have been set with at least one of a width or a length greater than for the plurality of slots formed in the core, and that stacks the plurality of segment coils in the multilayer form; and
an insertion device for inserting the plurality of segment coils that have been stacked in the multilayer form into the plurality of slots formed in the core.

7. The device for manufacturing an armature of claim 6, further comprising an alignment device that uses a plurality of alignment jigs, which are each formed with a plurality of alignment slots, to align a plurality of segment coils in a circular ring shape separately for each of the plurality of layers.

8. The device for manufacturing an armature of claim 6, further comprising a chuck that is configured by a structure dividable above and below and that grips a coil end side and a coil leading end side of the plurality of segment coils.
